Europäisches Patentamt

European Patent Office

Office européen des brevets

(19)

(11) Publication number: **0 651 381 A1**

# EUROPEAN PATENT APPLICATION

(12)

(21) Application number: 93203024.0

(22) Date of filing: 28.10.93

(51) Int. Cl.6: **G11B 7/24**

(43) Date of publication of application:
**03.05.95 Bulletin 95/18**

(84) Designated Contracting States:
**NL**

(71) Applicant: **Akzo Nobel N.V.**
**Velperweg 76**
**NL-6824 BM Arnhem (NL)**

(72) Inventor: **Van Wijk, Robert Jan**

Karthuizerstraat 2
NL-6824 KC Arnhem (NL)

(74) Representative: **Schalkwijk, Pieter Cornelis et al**
**AKZO NOBEL N.V.**
**Patent Department (Dept. APTA)**
**P.O. Box 9300**
**NL-6800 SB Arnhem (NL)**

(54) Optical storage medium and method of storing information.

(57) Presented is a medium for optical data storage which can be used, e.g., as a microfiche, a microfilm or an optical card and comprises a substrate and a layer including a liquid crystalline polymer. The LCP layer having a thickness (h), information is recorded using a laser having a focus width below 0.5 h. The LCP layer has an absorption coefficient ($\alpha$) which relates to the reciprocal value of the thickness (h) of the layer as $0.5/h \leq \alpha \leq 2/h$. Preferably, the absorption coefficient is approximately equal to the reciprocal value of the thickness of the layer. The medium for optical data storage thus allows an increase in the writing speed and/or a reduction of the required laser power.

Figure

EP 0 651 381 A1

Rank Xerox (UK) Business Services
(3.10/3.09/3.3.4)

The invention relates to a medium for optical data storage comprising a liquid crystalline polymer (LCP) and to a method of storing information.

Optical storage media are known, both for analog storage, e.g., microfiches, microfilms, optical cards, and for digital data storage, e.g., compact discs. It is also known to employ LCPs in optical data storage, and such media are known to comprise a substrate carrying a layer of the LCP, which layer is recordable by means of a laser.

In this respect EP-A-0 474 473 discloses a process and apparatus for manufacturing optical storage devices wherein a film of liquid crystal material, such as a liquid crystalline polymer (LCP) is deposited on a substrate. LCP material can be used for thermo-optical and photo-optical storage media. For LCP materials which have a glass transition temperature Tg above ambient, localized heating by a laser beam produces an optically clear written spot or line resulting from rapid cooling of the written material into the glass phase, so that the clear isotropic texture is quenched into the solid glass phase. Aligned LCP materials which have a Tg below ambient adopt a scattering texture when locally heated by a laser beam. The LCP material does not require the application thereto of an electric field in order to produce a scattering texture or clear lines or spots, so that it is possible to make a device without electrodes, which results in a simple construction. The object of EP-A-0 474 473 is to provide a process and an apparatus for mass producing such optical storage devices.

The Proceedings of the 4th Brite-EuRam Conference, Seville May 25-27, 1992, include an article by G.R. Möhlmann, "Erasable polymeric media for analog information storage and retrieval (P-2119)." This article relates to a dyed, side chain liquid crystal polymeric, optical storage medium. The recording mechanism of this storage medium is based on diode laser initiated, thermo-optical, liquid-crystalline-multidomain-to-isotropic (scattering to clear) phase transitions. The temperature required for the nematic to isotropic phase change process at the so-called "clearing temperature (Tc)" is achieved by the conversion of absorbed photon energy (by the dye molecules) into heat. In this article optical storage films are presented which have a substrate of a 100 $\mu$m thick polyester film on which a 3-7 $\mu$m thick active polymer recording layer was deposited. These films were tested to select the optimal polymer system (absorption, Tg, Tc, dye concentration, etc.) and processing conditions (polymer solution concentration, film layer thickness, coating speed, cooling speed for initialization, etc.). This paper, however, does not disclose which of the numerous variables or combinations of variables mentioned really have an effect on the writing speed.

The aspects of optical data storage media most in need of improvement include the writing speed and/or the laser power used for recording. While the order of magnitude and the absolute values of the writing speed and the laser power may differ widely per specific optical data storage application, it is a common desire to either increase the writing speed or achieve the appropriate writing speed by means of lower laser power. Additionally, the achievement of a higher writing speed and/or a lower laser power should not be attended with adverse effects such as a decrease of information depth (it is desired that, at its centre, a written line extends through the entire LCP layer) or the need for an unviably thin LCP layer displaying a low contrast.

The problems outlined above call for an improved optical data storage medium. In order to provide such an improved optical storage medium, the invention, in one embodiment, consists of a medium for optical data storage comprising a substrate and a layer including an LCP, the layer being recordable by a laser beam, characterized in that the layer has an absorption coefficient ($\alpha$) that relates to the reciprocal value of the thickness (h) of the layer as about 0.5/h $\leq \alpha \leq$ about 2/h, with the proviso that the focus width (full width at half maximum) of the recording laser is below approximately 0.7 h. The absorption coefficient ($\alpha$) is defined as follows:

$T = e^{-\alpha z}$, wherein T stands for transmission and z for the penetration depth in the layer. In other words: $1/\alpha$ is the distance over which the light intensity is reduced to 1/e of its original value due to absorption.

In another embodiment, the invention consists of a method for storing information in which an LCP layer is irradiated with a laser beam, the LCP layer and the laser wavelength being chosen so as to comply with the aforementioned relation between ($\alpha$) and (h).

It has been found that, as compared with optical storage media not according to the invention, compliance with this requirement leads to a considerably higher writing speed for the same laser power. Conversely, in accordance with the invention optical storage at a fixed writing speed is achieved with a considerably lower laser power.

It is preferred that the absorption coefficient ($\alpha$) of the LCP layer is within the range of 0.8/h to 2.0/h. Optimal results are achieved if ($\alpha$) is within the range of from approximately 1.0/h to approximately 1.5/h.

The optical data storage medium of the present invention can be manufactured using materials and methods known in the art.

The LCP layer is supported by a substrate, an especially suitable substrate being a polyester substrate such as polyethylene terephthalate.

The LCP layer employed has a thickness in the range of from about 0.5 $\mu$m to about 20 $\mu$m, and is preferably approximately 5 $\mu$m. The layer can be applied onto the substrate in known manner, e.g., by coating a polymer solution onto the substrate, followed by evaporation of the solvent.

The LCP should be able to absorb the wavelength energy emitted by the laser employed. This may be achieved by appropriate selection of the LCP itself, but usually the LCP layer will include a dye which displays the required absorption. Such a dye may be covalently incorporated into the LCP, but it can also be present in the form of a solid solution. In view of the desire to employ infrared lasers, it is preferred to use an infrared dye, especially one absorbing at a wavelength in the range of from 1000 nm to 780 nm. In this respect squarylium, croconium, azo, and azomethine dyes are preferred.

While the positive effect attained with the present invention can be achieved regardless of the type of LCP employed, it is preferred to use side chain LCPs, notably LC polyesters with a stilbene side-chain or LC polyurethanes with a biphenyl or imine side chain. Among the advantages of these LCPs are a relatively simple preparation and reasonable thermal, chemical, and UV stabilities. Suitable LCPs and dyes have been disclosed, int.al., in EP 350 113, EP 478 052, and EP 550 105.

It should be noted that the man of ordinary skill in the art does not need to excercise any undue effort to comply with the requirement according to the invention, i.e., the above-identified relation between the absorption coefficient ($\alpha$) of the LCP layer and the thickness (h) of the layer. The absorption coefficient can be tuned relatively easily, either by choosing the appropriate LCP and/or the appropriate dye and dye content. The absorption coefficient at the appropriate wavelength can be determined by simple spectral analysis.

The invention also pertains to a method for storing information which comprises the irradiation of an LCP layer with a laser beam so as to cause a local phase change in the LCP layer, the laser beam being chosen so as to comply with the aforementioned relation between ($\alpha$) and (h). Particularly suitable LCP layers are those which have been initialized for laser recording by being brought into the scattering, anisotropic state. To this end, the entire LCP layer is heated to above its Tc so as to bring it into the isotropic state, and then slowly cooled to below Tg. In the temperature range between Tc and Tg (Tg < Tc), a scattering (multidomain anisotropic) structure is obtained which has an opaque appearance and is preserved below Tg. In such a scattering LCP layer information can be written by means of laser irradiation, the laser energy absorbed by the LCP layer resulting in local transition from the scattering, anisotropic structure to the clear, isotropic state. This local isotropic state is preserved below Tg, being subject to a cooling rate that is too fast for the scattering texture to be formed again (i.e., the isotropic state is frozen in below Tg). The invention is also applicable to other types of LCP layers, e.g., those that have been aligned by means of an external field, such as an electric field, and in which laser writing causes local disordering of the alignment.

The optical storage media substantially described hereinbefore are suitable for both analog and digital data storage, but particularly for use in typical analog data storage devices such as microfiches, microfilms, and optical cards.

The invention will be further described hereinafter with reference to the following Examples and Figure. The Examples and Figure should be construed to be explanatory rather than limitative.

Example

An optical storage medium is prepared by applying onto a polyethylene terephthalate substrate having a thickness of 100 $\mu$m an LCP layer having a thickness of 5 $\mu$m. The LCP is deposited from solution by the so-called meterbar technique, followed by evaporation of the solvent. The LCP is a liquid crystalline side chain polyurethane in accordance with EP 550 105 having a Tc of 132 °C, a Tg of 95 °C, and comprising a croconium dye (solid solution). The concentration of the dye amounting to 0.5 wt%, the resulting absorption coefficient at a wavelength of 825 nm is 0.2 $\mu m^{-1}$, i.e., equal to the reciprocal value of the thickness of the LCP layer.

The optical storage medium was heated to above Tc for a few seconds, resulting in an isotropic, non-scattering state. By slow cooling to below Tc a scattering structure was obtained, and the optical storage medium had an opaque appearance, which was preserved below Tg.

Information was written in the storage medium by a GaAs laser focussed to a Gaussian shape with a full width at half maximum of 5 $\mu$m. Employing a laser power of 75 mW on the LCP layer, a writing speed of 1.8 m/s was obtained, the contrast being good.

Comparative Example

The same LCP and the same dye as in the Example were employed, the layer also having a thickness of 5 $\mu$m, but the dye concentration was 2 wt%, resulting in an absorption coefficient of 0.8 $\mu m^{-1}$, i.e., substantially higher than the reciprocal value of the layer thickness, and outside the range specified by the invention.

With the same focus width of the laser beam as in the Example, and the same power on the film, a writing experiment was performed, the resulting writing speed being 1.1 m/s.

Figure

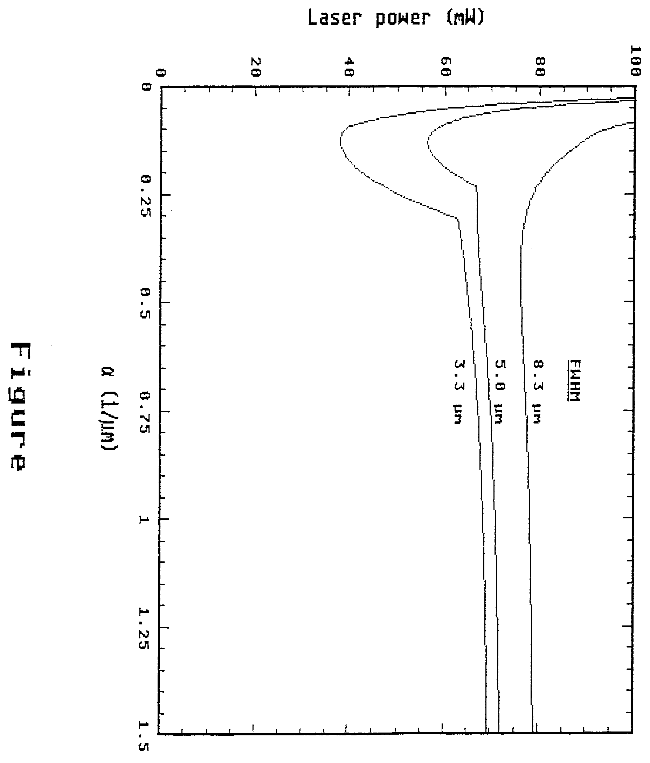

In the figure the effect attainable with the present invention is clearly illustrated. It indicates the laser power required for writing in a supported LCP film having a thickness (h) of 8 $\mu m$ as a function of the absorption coefficient ($\alpha$). The LCP clearing temperature is 125 °C, the writing speed 1 m/s. Substrate and LCP heat capacity is 2.4 MJ/m$^3$K. The figure shows that within the range of about 0.5/h < ($\alpha$) < 2/h, the required laser power has a minimum, provided the focus width is not too high.

**Claims**

1. A medium for optical data storage comprising a substrate and a layer including an LCP, the layer being recordable by a laser beam and having a thickness (h), characterized in that at the wavelength emitted by the laser, the layer has an absorption coefficient ($\alpha$) that relates to the thickness (h) of the layer as approximately $0.5/h \leq \alpha \leq$ approximately 2/h, with the proviso that the focus width of the recording laser beam is below 0.7 h.

2. A medium for optical data storage according to claim 1, characterized in that the absorption coefficient ($\alpha$) of the LCP layer is within the range of from 1/h to 1.5/h.

3. A medium for optical data storage according to claim 1 or 2, characterized in that the LCP layer has a thickness (h) in the range of from about 0.5 $\mu m$ to about 20 $\mu m$.

4. A medium for optical data storage according to any one of the preceding claims, characterized in that the LCP layer comprises a dye absorbing at a wavelength in the range of from 1000 nm to 780 nm.

5. A medium for optical data storage according to any one of the preceding claims, characterized in that the LCP is a side chain polyester or polyurethane.

6. A medium for optical data storage according to any one of the preceding claims, characterized in that the substrate is a polyester substrate.

7. A method for optically storing information by affecting local phase changes in an LCP, the method comprising irradiating a layer of the LCP having a thickness (h) and an absorption coefficient ($\alpha$) within the range of from 0.5/h to 2/h with a laser beam having a focus width below 0.6 h.

8. The use of a medium for optical data storage according to any one of the preceding claims in analog data storage devices including microfiches, microfilms, and optical cards.

Figure

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB-A-2 248 963 (GEC MARCONI LTD) <br> * page 4, line 8 - page 5, line 15; claims 1-10 * | 1,3,4,7 | G11B7/24 |
| D,A | EP-A-0 550 105 (AKZO N. V.) <br> * abstract; claim 12 * | 1,5 | |
| D,A | EP-A-0 478 052 (AKZO N. V.) <br> * claims 1-8 * | 1 | |
| A | EP-A-0 369 432 (OLYMPUS OPTICAL CO. LTD.) <br> * claims 1-4 * | 1 | |
| | | | TECHNICAL FIELDS SEARCHED (Int.Cl.6) |
| | | | G11B |

The present search report has been drawn up for all claims

| Place of search | Date of completion of the search | Examiner |
|---|---|---|
| BERLIN | 30 March 1994 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document